(19) Europäisches Patentamt
European Patent Office
Office européen des brevets

(11) EP 0 512 608 B1

(12) **EUROPEAN PATENT SPECIFICATION**

(45) Date of publication and mention of the grant of the patent:
**13.03.1996 Bulletin 1996/11**

(51) Int. Cl.[6]: **B60G 17/01**

(21) Application number: **92201165.5**

(22) Date of filing: **24.04.1992**

(54) **Suspension controller**

Steuerung für eine Radaufhängung

Commande de suspension

(84) Designated Contracting States:
**DE ES FR GB**

(30) Priority: **06.05.1991 US 695881**

(43) Date of publication of application:
**11.11.1992 Bulletin 1992/46**

(73) Proprietor: **GENERAL MOTORS CORPORATION
Detroit Michigan 48202 (US)**

(72) Inventors:
- **Hanson, Reed David
Dayton, OH 45458 (US)**
- **Tracht, Steven Lee
Springboro, OH 45066 (US)**
- **Majeed, Kamal Naif
Centerville, OH 45459 (US)**
- **Westerkamp, John J
Beavercreek, OH 45440 (US)**

(74) Representative: **Denton, Michael John et al
Patent Section
1st Floor
Gideon House
28 Chapel Street
Luton Bedfordshire LU1 2SE (GB)**

(56) References cited:
**EP-A- 0 032 158**
**EP-A- 0 321 078**
**EP-A- 0 341 883**
**WO-A-91/00187**
**DD-A- 223 835**

- **PROCEEDINGS OF THE IEEE, vol.76, no.1, January 1988, NEW YORK, USA pages 19 - 37 REGALIA ET AL. 'The digital all-pass filter'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 512 608 B1

## Description

The invention relates to a suspension controller for motor vehicles, and to a method of filtering a vehicle body acceleration signal from a sensor of such a controller.

Prior art document WO-A-91/00187 discloses a suspension controller for controlling the suspension of a motor vehicle, which vehicle comprises a body and at least one wheel connected thereto by a suspension actuator, the controller comprising an accelerometer disposed on the vehicle body and adapted in use to provide a vehicle body acceleration signal representative of the acceleration of the vehicle body in a direction substantially perpendicular to the plane of the road; an integrator for integrating the vehicle body acceleration signal so as to produce a vehicle body velocity signal; means responsive to the vehicle body velocity signal for controlling the suspension actuator; and a high-pass filter disposed between the accelerometer and the integrator for suppressing d.c. components of the vehicle body acceleration signal.

A key parameter for use in the control of some vehicle suspensions is the absolute vertical velocity at some point of the vehicle body. At present, there exist no practical absolute velocity sensors for directly measuring this parameter. It can be obtained, however, by integrating the output of a vertical absolute acceleration sensor at the same point, provided that the acceleration sensor output signal is high-pass filtered to remove all DC components that might otherwise cause integrator saturation and drift.

The natural frequency of vibration of a typical vehicle body is in the range of 1 to 2 Hertz. To prevent loss of information in this frequency range, a high-pass filter must have a steep rise from zero Hertz (DC), where full suppression is desired, to the beginning of its passband at 1 Hertz, where minimum suppression is desired. Using a traditional, one pole filter design and an integrator with a low frequency, one pole rolloff for additional high pass filtering, the filter pole lies very close to the integrator pole; and quantization error becomes significant in a digital machine embodiment of the filter. A sixteen bit, fixed point, digital signal processor (DSP) is desirable for its comparatively low cost; but substantial integrator drift may occur with a standard one pole high-pass filter on such a processor due to quantization errors. Alternative fixed point digital signal processors with greater resolution or floating point computing machines increase the cost.

The present invention seeks to provide an improved suspension controller and method of filtering a vehicle body acceleration signal from a sensor of such a controller.

According to an aspect of the present invention, there is provided a suspension controller as specified in claim 1.

According to another aspect of the present invention, there is provided a method of filtering a vehicle body acceleration signal as specified in claim 4.

With the invention, a sixteen-bit, fixed point, digital signal processor may be used for a high-pass filter with acceptable quantization error and speed of processing if it is programmed with a digital second order all-pass filter configured as a high-pass filter. The input to the filter routine for this signal processor is summed with its output divided by two. The filter routine itself may comprise a normalized lattice two-pair network for the first stage, which reduces to a negative unity gain, and a single multiplier two-pair lattice network for the second stage. The resulting routine requires only one 16x32 bit multiplication.

An embodiment of the present invention is described below, by way of illustration only, with reference to the accompanying drawings, in which:

Figure 1 is a schematic diagram of a motor vehicle with a suspension controller according to an embodiment of this invention;
Figure 2 is a block diagram of an embodiment of controller for use in the suspension controller of Figure 1;
Figures 3A to 3D are block diagrams useful in explaining the operation of the controller of Figure 2; and
Figure 4 is a flow chart of the high pass filter operation of the controller of Figure 2.

Figure 1 shows a vehicle having a body 10 comprising a sprung mass. Body 10 is substantially rectangular in shape and is supported on four wheels 11, located at suspension points adjacent each of its corners, by suspension apparatus 12. Each suspension apparatus 12 comprises a weight-bearing suspension spring in parallel with a suspension actuator connected to exert a controllable force in parallel with the spring between the body 10 and wheel 11 at that suspension point. The suspension actuator may be a hydraulic or electric actuator capable of providing power to the suspension, as used in fully active suspension control. Alternatively, the actuator may be a variable damper, capable only of dissipating power, as used in semi-active suspension control in which case it may provide damping control in either a continuous or a discrete manner. Suspension apparatus 12 further includes an axle for rotatably supporting wheel 11 and such other suspension components, such as control arms, as are provided in standard vehicle suspension apparatus.

At each corner of body 10, a suspension position sensor 13 may be connected between the body and unsprung mass to measure the relative vertical position thereof and to generate an output vertical suspension position signal for input to a controller 15. The relative vertical suspension position signal may be differentiated to produce a relative body/wheel vertical velocity signal.

An acceleration sensor 16 is also positioned at each corner of body 10; and sensor 16 generates an absolute vertical acceleration signal of that corner of body 10 for input to controller 15. The absolute body corner velocities at the four corners of the body may be derived from these acceleration signals by first deriving vehicle body heave, roll and pitch accelerations, integrating these accelerations to provide vehicle body heave, roll and pitch velocities and transforming these to vehicle body corner velocities. From the difference between the body corner velocity and relative body/wheel velocity at each corner, controller 15 is able to compute the vertical wheel velocity at that corner; and from the wheel velocity and various body corner velocities, controller 15 is able to compute the desired force between the body and wheel at that corner of the vehicle. The acceleration sensors 16 should be mounted with care so as to minimize cross-axis sensitivity which might contaminate the vertical acceleration signal with horizontal acceleration information.

Additional signals which may optionally be generated are a vehicle deceleration or braking signal by brake sensor 17, a vehicle speed signal from vehicle speed sensor 18 and a vehicle steering signal from vehicle steering sensor 19. These latter signals are not required for the calculating the vertical velocity of the body 10 so will not be further described. However, many examples of such sensors and their uses in suspension control are known in the art.

The hardware configuration of controller 15 is shown in block diagram form in Figure 2. The analog inputs from sensors 13, 16, and 17 to 19 are processed in input apparatus 60, which includes sensor interface circuitry, anti-aliasing filters and any required additional analog signal processing, such as the differentiating of the relative position signals from sensors 13 to form relative velocity signals. The integration of the body corner acceleration signals from sensors 16 is performed in software within the digital circuitry to be described.

With regard to the input signals, it should be noted that the control has been found to work well, at least in the case of an on/off damping actuator, with a loop frequency of 1 KHz, which means that, to avoid aliasing distortion, the input signals should be low-pass filtered to avoid any significant input signals at frequencies above 500 Hz. The differentiator, especially, needs to be designed with care, since differentiation, by nature, accentuates the high frequencies in the signal and heavy filtering tends to introduce phase delays which can slow system response.

The processed and filtered input signals are read into the system by a multiplexer 61, which feeds each signal, in turn, to a sample-and-hold circuit 62 and an analog-to-digital (A/D) converter 63. The signals can be pipelined through this portion of the apparatus to speed data read-in. The output of the A/D converter 63 is fed to an eight-bit data bus connected also to a microprocessor 64, RAM 65 and output buffers 66. A separate 16-bit data bus connects dual port RAM 65 to a digital signal processor (DSP) 67. Microprocessor 64, which may, for example, be one of the 68HC11 family made by the Motorola (R) Corporation, contains the basic system operating software and controls the data handling and decision making tasks of the controller 15, while the digital signal processor 67, which may be a TMS320C15 or TMS320C17 made by Texas Instruments (R) Corporation, is optimized for mathematical computations such as multiplication, which would greatly slow down a general purpose microprocessor. Such multiplications are used both in the solution of the control equations and in the digital integration routine to be described.

The output buffers 66 interface the digital processing apparatus with the four actuators 12 and may further include digital low-pass filtering to prevent the output of signals having frequencies higher than those to which the actuators need respond. A more complete description of the hardware can be found in the paper "Dual Processor Automotive Controller" by Kamal N. Majeed, published in the proceedings of the IEEE/Applications of Automotive Electronics, Dearborn, Michigan, Oct. 19, 1988. However, cost savings may be achieved in a mass produced system by the replacement of the dual port RAM 65 with ordinary RAM and the use of a software controlled interface bus between the microprocessor 64 and digital signal processor 67 and a three-line serial interface for input and output, as will be apparent to the skilled person.

As previously mentioned, the derived vehicle body heave, roll and pitch accelerations are each high-pass filtered and integrated to generate corresponding velocities. The problems involved in this process in a vehicle having a natural resonant body frequency of 1 to 2 Hz and a 16-bit, fixed point digital signal processor are discussed in the introduction to this description. A solution to these problems can be found in the use of a digital all-pass filter.

A digital all-pass filter passes all frequencies but causes the phase to shift through a selected frequency range determined by the filter parameters. The transfer function for a second order all-pass filter is given by the following equation:

$$A(z) = \frac{k_2 + k_1(1+k_2)z^{-1} + z^{-2}}{1 + k_1(1+k_2)z^{-1} + k_2 z^{-2}},$$

wherein $k_1$ determines the centre of the phase shift and $k_2$ determines the bandwidth of the phase transition.

The constant $k_1$ is calculated as

$$k_1 = -\cos(\omega_0),$$

wherein $\omega_0$ is the normalized digital centre frequency of the phase shift, which is defined as the centre frequency divided by the folding frequency.

The constant $k_2$ is derived from

$$k_2 = [1-\tan(\Omega/2)]/[1+\tan(\Omega/2)],$$

wherein $\Omega$ is the normalized digital bandwidth, defined as the bandwidth divided by the folding frequency, which latter is one half of the sampling rate.

The digital all-pass filter may be implemented in several forms. The most computationally efficient form is the single multiplier lattice two-pair network, as seen in Figure 3(A), since it requires only a single multiplier $k_m$. A second alternative is the normalized lattice two-pair network, as seen in Figure 3(B). In the case of a high-pass filter, the centre frequency is zero (DC). To produce the velocity signal in the required frequency bands, a filter bandwidth of 0.1 Hz is provided. The normalized centre frequency $\omega_0 = 0.0$ and, since the desired phase shift is $2\pi$ radians, $k_1 = -1.0$. Normalizing the bandwidth provides

$$\Omega = \frac{\text{Bandwidth}^*2\pi}{\text{Sampling Frequency}} = \frac{0.2\pi}{500} = 0.00062832,$$

wherein the Bandwidth and Sampling Frequency are both in Hz; and $k_2$ therefore equals 0.9994.

To minimize computations, the single multiplier two-pair lattice network is used for the second stage of the filter. The normalized lattice two-pair network is used for the first stage, due to the reduction in structure when $k_m = \pm 1$. Substituting $k_1 = -1.0$ for $k_m$ in the normalized two-pair lattice network, the $\sqrt{(1-|k_1|^2)}$ term reduces to 0.0. In addition, since this is the first stage, the $AP_{m-1}(z)$ block is unity. Thus, the first stage reduces to a negative unity gain stage. The final, reduced all-pass filter lattice network is shown in Figure 3(C).

To implement the high pass filter utilizing qthe all-pass filter design, a band-reject structure is used, as shown in Figure 3(D). The input is passed through the all-pass filter network, and the output of the all-pass filter is summed with the input, with an initial scale factor of 0.5 to compensate for the doubling effect of the summing junction.

From the diagrams in Figures 3(C) and 3(D), the difference equations are derived as follows:

$$a_n = k_2(x_n - e_{n-1});$$

$$b_n = a_n + x_n;$$

$$e_n = -b_n;$$

$$y_n = a_n + e_{n-1} \text{ (all-pass output)};$$

$$y_{hpf} = 0.5(x_n + y_n) \text{ (high-pass output)}.$$

Since the intermediate variable e is the only recursive variable, these difference equations can be reduced, while maintaining the benefits of the lattice structure:

$$e_n = -[k_2(x_n - e_{n-1}) + x_n];$$

$$y_{hpf} = 0.5(e_{n-1} - e_n).$$

Although the total gain for the all-pass, high pass filter is unity, the intermediate variables can overflow. Since e is a recursive variable, intermediate overflows are not acceptable; and compensation for such overflow should be provided.

The greatest overflow in the intermediate variables will occur at the centre frequency of the filter or, in this case, at DC. Simulation of a 0.1 Hz bandwidth filter with a DC input shows that an overflow slightly larger than a factor of 3,000 occurs for e. The next greatest power of two is 4,096. Thus the input must be shifted to the right by 12 bits (divided by 4096) prior to any arithmetic with e. Since most 16-bit digital signal processors have 32-bit accumulators (to accommodate 16x16 bit multiplications), shifts on arithmetic operations are easily accomplished. Finally, the output must be shifted left by 11 bits (multiplied by 2048) to compensate for the right shift of the input minus one bit for the 0.5 scaling factor.

If e is stored as a 16-bit number, using two's complement representation, quantization errors will occur due to the 12-bit shift. Thus e must be stored as a 32-bit number; and this will require 16x32 bit multiplication with the processor described. This multiplication requires significantly more time (x50) than a 16x16 bit multiplication. Although this multiplication increases cycle time on a 16-bit machine, the total time is still less than a traditional filter with extended (32-bit) precision, due to the minimum multiplication implementation.

The flow chart for the implementation of this filter is shown in Figure 4. BUFFER, TEMP and $e_{n-1}$ are all 32-bit variables; while $x_n$ and $y_n$ are 16-bit variables. $k_2$ is a 16-bit constant. A triple equal sign (===) represents a 32-bit operation; and a double equal sign (==) represents a 16-bit operation. In most machines, BUFFER is the accumulator and TEMP is a temporary RAM register.

Referring to Figure 4, $x_n$ is divided by 4096 (shifted 12 bits right) and added to $e_{n-1}$ in step 100. This corresponds to the first summing junction of Figure 3(C), in which $x_n$ is the input and $e_{n-1}$ is the intermediate value from the $z^{-1}$ block. The result is placed in BUFFER. In step 101, the quantity in BUFFER is multiplied by $k_2$. In step 102, the quantity in BUFFER is added to the input $x_n$ divided by 4096 (shifted 12 bits right) and the result is stored in BUFFER. This corresponds to the second summing junction in Figure 3(C). In step 103, the quantity in BUFFER is stored in TEMP for use in the next cycle as the recursive variable $e_{n-1}$. In step 104, the present $e_{n-1}$ (from last cycle) is subtracted from the quantity stored in BUFFER with the difference stored in BUFFER. This corresponds to the third and last summing junction in Figure 3(C). In step 105, BUFFER is multiplied by 2,048 (shifted 11 bits left). This is the net result of multiplying by 4,096 (shift 12 bits left) to compensate for the original 12-bit shift right at the input and a divide by 2 (shift 1 bit right) for the 0.5 factor in Figure 3(D). In step 106, the 16 most significant bits of BUFFER become $y_n$, which is output as the filtered signal to a standard integrator routine to perform the integration and thus generate the absolute vertical body velocity signal. In step 107, the quantity in TEMP is retained as $e_{n-1}$ for the next cycle.

## Claims

1. A suspension controller for controlling the suspension of a motor vehicle, which vehicle comprises a body (10) and at least one wheel (11) connected thereto by a suspension actuator (12), the controller (15) comprising an accelerometer (16) disposed on the vehicle body and adapted in use to provide a vehicle body acceleration signal representative of the acceleration of the vehicle body in a direction substantially perpendicular to the plane of the road; an integrator (64,65,67) for integrating the vehicle body acceleration signal so as to produce a vehicle body velocity signal; means (66) responsive to the vehicle body velocity signal for controlling the suspension actuator (12); a high-pass filter (64,65,67) disposed between the accelerometer and the integrator for suppressing d.c. components of the vehicle body acceleration signal and for passing components of the vehicle body acceleration signal lying in the range of substantially 1 to 2 Hz; the high-pass filter comprising, means for feeding the vehicle body acceleration signal to a second order all-pass digital filter (AP(Z)) having a phase shift centre substantially at zero Hz and a phase shift bandwidth of substantially 0.1 Hz, and means for summing the output of the second order all-pass digital filter with the vehicle body acceleration signal and for reducing the sum thereof by a factor of one half.

2. A suspension controller according to claim 1, wherein the second order all-pass digital filter includes a first stage comprising a normalized lattice two-pair network and a second stage comprising a single multiplier two-pair network.

3. A suspension controller according to claim 2, wherein the first stage normalized lattice two-pair network comprises a unity gain stage.

4. A method of filtering a vehicle body acceleration signal representative of acceleration of a vehicle body in a direction substantially perpendicular to the plane of the road, which vehicle includes a body (10), at least one wheel (11) connected thereto by a suspension actuator (12) a suspension controller (15) comprising an accelerometer (16) disposed on the vehicle body and adapted to provide the vehicle body acceleration signal, an integrator (64,65,67) for integrating the vehicle body acceleration signal so as to produce a vehicle body velocity signal, means (66) responsive to the vehicle body velocity signal for controlling the suspension actuator and a 16-bit fixed point digital signal processor (67) including a plurality of 32-bit buffers; the method, performed in cyclical manner, being adapted to filter the vehicle acceleration signal prior to integration thereof and to suppress components of the vehicle body acceleration signal at substantially zero Hz and to pass components of the vehicle body acceleration signal being in the range of substantially 1 to 2 Hz, and comprising for each cycle the steps of dividing the vehicle body acceleration signal ($x_n$) by 4096, adding the quotient thereof to a stored recursive variable ($e_{n-1}$) from a previous cycle, and storing the sum in a first buffer; multiplying the contents of the first buffer by a constant ($k_2$) and storing the product in the first buffer; adding to the contents of the first buffer the vehicle acceleration signal ($x_n$) divided by 4096 and storing the sum in the first buffer and a second buffer; subtracting the stored recursive variable ($e_{n-1}$) from a previous cycle from the first buffer and storing the difference in the first buffer; multiplying the contents of the first buffer by 2048 and feeding the product ($y_n$) thereof, truncated to 16 bits, to the integrator; and storing the contents of the second buffer as the stored recursive variable ($e_{n-1}$) for a subsequent cycle.

5. A method according to claim 4, wherein the first buffer is a 32-bit accumulator and the steps of dividing by 4096 and multiplying by 2048 are performed by right or left shifting respectively.

## Patentansprüche

1. Eine Aufhängungssteuervorrichtung zum Steuern der Aufhängung eines Kraftfahrzeuges, welches Fahrzeug einen Körper (10) und wenigstens ein Rad (11) umfaßt, das damit durch einen Aufhängungsaktuator (12) verbunden ist, wobei die Steuervorrichtung (15) umfaßt einen Beschleunigungsmesser (16), der auf dem Fahrzeugkörper angeordnet und ausgelegt ist, im Gebrauch ein Fahrzeugkörperbeschleunigungssignal zu liefern, welches die Beschleunigung des Fahrzeugkörpers in einer Richtung im wesentlichen senkrecht zu der Ebene der Straße darstellt; einen Integrator (64, 65, 67) zum Integrieren des Fahrzeugkörperbeschleunigungssignals, um ein Fahrzeugkörpergeschwindigkeitssignal zu erzeugen; Mittel (66), die auf das Fahrzeugkörpergeschwindigkeitssignal ansprechen, um den Aufhängungsaktuator (12) zu steuern; ein Hochpaßfilter (64, 65, 67), das zwischen dem Beschleunigungsmesser und dem Integrator angeordnet ist, um Gleichstromkomponenten des Fahrzeugkörperbeschleunigungssignals zu unterdrücken und Komponenten des Fahrzeugkörperbeschleunigungssignals durchzulassen, die in dem Bereich von im wesentlichen 1 bis 2 Hz liegen; wobei das Hochpaßfilter Mittel zum Einspeisen des Fahrzeugkörperbeschleunigungssignals in ein Allpaß-Digitalfilter zweiter Ordnung (AP(Z)), welches ein Phasenverschiebungszentrum im wesentlichen bei null Hz und eine Phasenverschiebungsbandbreite von im wesentlichen 0,1 Hz aufweist, und Mittel zum Summieren des Ausgangs des AllpaßDigitalfilters zweiter Ordnung mit dem Fahrzeugkörperbeschleunigungssignal und zum Reduzieren der Summe davon um einen Faktor von Einhalb umfaßt.

**2.** Eine Aufhängungssteuervorrichtung nach Anspruch 1, worin das Allpaß-Digitalfilter zweiter Ordnung eine erste Stufe mit einem normalisierten Gitter-Zwei-Paar-Netzwerk und eine zweite Stufe mit einem Einzelmultiplizierer-Zwei-Paar-Netzwerk umfaßt.

**3.** Eine Aufhängungssteuervorrichtung nach Anspruch 2, worin das normalisierte Gitter-Zwei-Paar-Netzwerk der ersten Stufe eine Stufe mit eines Verstärkung von Eins umfaßt.

**4.** Ein Verfahren zum Filtern eines Fahrzeugkörperbeschleunigungssignals, das die Beschleunigung eines Fahrzeugkörpers in einer Richtung im wesentlichen senkrecht zu der Ebene der Straße darstellt, welches Fahrzeug umfaßt einen Körper (10), wenigstens ein Rad (11), das damit durch einen Aufhängungsaktuator (12) verbunden ist, eine Aufhängungssteuervorrichtung (15) mit einem Beschleunigungsmesser (16), der auf dem Fahrzeugkörper angeordnet und ausgelegt ist, das Fahrzeugkörperbeschleunigungssignal zu liefern, einem Integrator (64, 65, 67) zum Integrieren des Fahrzeugkörperbeschleunigungssignals, um ein Fahrzeugkörpergeschwindigkeitssignal zu erzeugen, Mitteln (66), die auf das Fahrzeugkörpergeschwindigkeitssignal ansprechen, um den Aufhängungsaktuator zu steuern, und einem 16-Bit-Festkomma-Digitalsignalprozessor (67), der eine Vielzahl von 32-Bit-Puffern umfaßt; wobei das Verfahren, das auf zyklische Weise ausgeführt wird, ausgelegt ist, das Fahrzeugbeschleunigungssignal vor dessen Integration zu filtern und Komponenten des Fahrzeugkörperbeschleunigungssignals bei im wesentlichen null Hz zu unterdrücken und Komponenten des Fahrzeugkörperbeschleunigungssignals, die im Bereich von im wesentlichen 1 bis 2 Hz liegen, durchzulassen, und für jeden Zyklus die Schritte umfaßt, daß das Fahrzeugkörperbeschleunigungssignal ($x_n$) durch 4096 geteilt wird, der Quotient davon zu einer gespeicherten rekursiven Variablen ($e_{n-1}$) von einem vorhergehenden Zyklus addiert wird und die Summe in einem ersten Puffer gespeichert wird; daß die Inhalte des ersten Puffers mit einer Konstanten ($k_2$) multipliziert werden und das Produkt in dem ersten Puffer gespeichert wird; daß zu den Inhalten des ersten Puffers das durch 4096 dividierte Fahrzeugbeschleunigungssignal ($x_n$) addiert wird und die Summe in dem ersten Puffer und einem zweiten Puffer gespeichert wird; daß die gespeicherte rekursive Variable ($e_{n-1}$) von einem vorhergehenden Zyklus von dem ersten Puffer abgezogen wird und die Differenz in dem ersten Puffer gespeichert wird; daß die Inhalte des ersten Puffers mit 2048 multipliziert werden und das Produkt ($y_n$) davon, das auf 16 Bits abgeschnitten wird, in den Integrator eingespeist wird; und daß die Inhalte des zweiten Puffers als die gespeicherte rekursive Variable ($e_{n-1}$) für einen nachfolgenden Zyklus gespeichert werden.

**5.** Ein Verfahren nach Anspruch 4, worin der erste Puffer ein 32-Bit-Akkumulator ist, und die Schritte der Division durch 4096 und der Multiplikation mit 2048 durch Verschieben nach rechts bzw. links ausgeführt werden.

## Revendications

**1.** Dispositif de commande de suspension pour commander la suspension d'un véhicule à moteur, lequel véhicule comprend une carrosserie (10) et au moins une roue (11) reliée à elle par un actionneur de suspension (12), le dispositif de commande (15) comprenant un accéléromètre (16) disposé sur la carrosserie du véhicule et conçu pour fournir un signal d'accélération de carrosserie de véhicule représentant l'accélération de la carrosserie du véhicule dans une direction pratiquement perpendiculaire au plan de la route ; un intégrateur (64, 65, 67) pour intégrer le signal d'accélération de carrosserie de véhicule de manière à produire un signal de vitesse de carrosserie du véhicule ; des moyens (66) répondant au signal de vitesse de carrosserie de véhicule pour commander l'actionneur de suspension (12) ; un filtre passe-haut (64, 65, 67) disposé entre l'accéléromètre et l'intégrateur pour supprimer des composantes en courant continu du signal d'accélération de carrosserie de véhicule et pour transmettre des composantes du signal d'accélération de carrosserie de véhicule situées dans la gamme d'environ 1 à 2 Hz ; le filtre passe-haut comprenant des moyens pour envoyer le signal d'accélération de carrosserie de véhicule à un filtre numérique passe-tout du deuxième ordre (AP(z)) ayant un centre de déphasage sensiblement à zéro hertz et une bande passante de déphasage d'environ 0,1 Hz, et des moyens pour additionner la sortie du filtre numérique passe-tout du deuxième ordre au signal d'accélération de carrosserie de véhicule et pour réduire leur somme d'un facteur d'un demi.

**2.** Dispositif de commande de suspension selon la revendication 1, dans lequel le filtre numérique passe-tout du deuxième ordre comprend un premier étage comportant un réseau normalisé en treillis à deux paires et un deuxième étage comportant un réseau unique multiplieur à deux paires.

**3.** Dispositif de commande de suspension selon la revendication 2, dans lequel le réseau normalisé en treillis à deux paires du premier étage comprend un étage à gain unité.

**4.** Procédé pour filtrer un signal d'accélération de carrosserie de véhicule représentant l'accélération d'une carrosserie d'un véhicule dans une direction sensiblement perpendiculaire au plan de la route, ledit véhicule comprenant une carrosserie (10), au moins une roue (11) reliée à elle par un actionneur de suspension (12), un dispositif de commande de suspension (15) comprenant un accéléromètre (16) disposé sur la carrosserie du véhicule et conçu pour fournir le signal d'accélération de carrosserie de véhicule, un intégrateur (64, 65, 67) pour intégrer le signal d'accélération de carrosserie de véhicule de manière à produire un signal de vitesse de carrosserie de véhicule, des moyens (66) répondant au signal de vitesse de carrosserie du véhicule pour commander l'actionneur de suspension et un processeur numérique de signaux à 16 bits en virgule fixe (67) comprenant une pluralité de tampons à 32 bits ; le procédé, exécuté de manière cyclique, étant conçu pour filtrer le signal d'accélération du véhicule avant son intégration et pour supprimer des composantes du signal d'accélération de carrosserie de véhicule à environ zéro hertz et pour transmettre des composantes du signal d'accélération de carrosserie de véhicule situées dans la gamme d'environ 1 à 2 Hz, et comprenant pour chaque cycle les étapes suivantes :

diviser le signal d'accélération de carrosserie de véhicule ($x_n$) par 4 096, ajouter son quotient à une variable récursive stockée ($e_{n-1}$) provenant d'un cycle précédent, et stocker la somme dans un premier tampon ; multiplier le contenu du premier tampon par une constante ($k_2$) et stocker le produit dans le premier tampon ; ajouter au contenu du premier tampon le signal d'accélération de carrosserie de véhicule divisé par 4 096 et stocker la somme dans le premier tampon et dans un deuxième tampon ; soustraire la variable récursive stockée ($e_{n-1}$) provenant d'un cycle précédent du premier tampon et stocker la différence dans le premier tampon ; multiplier le contenu du premier tampon par 2 048 et envoyer son produit ($y_n$), tronqué à 16 bits, à l'intégrateur ; et stocker le contenu du deuxième tampon comme variable récursive stockée ($e_{n-1}$) pour un cycle suivant.

**5.** Procédé selon la revendication 4, dans lequel le premier tampon est un accumulateur à 32 bits et les étapes de division par 4 096 et de multiplication par 2 048 sont exécutées au moyen respectivement d'un décalage à droite ou à gauche.

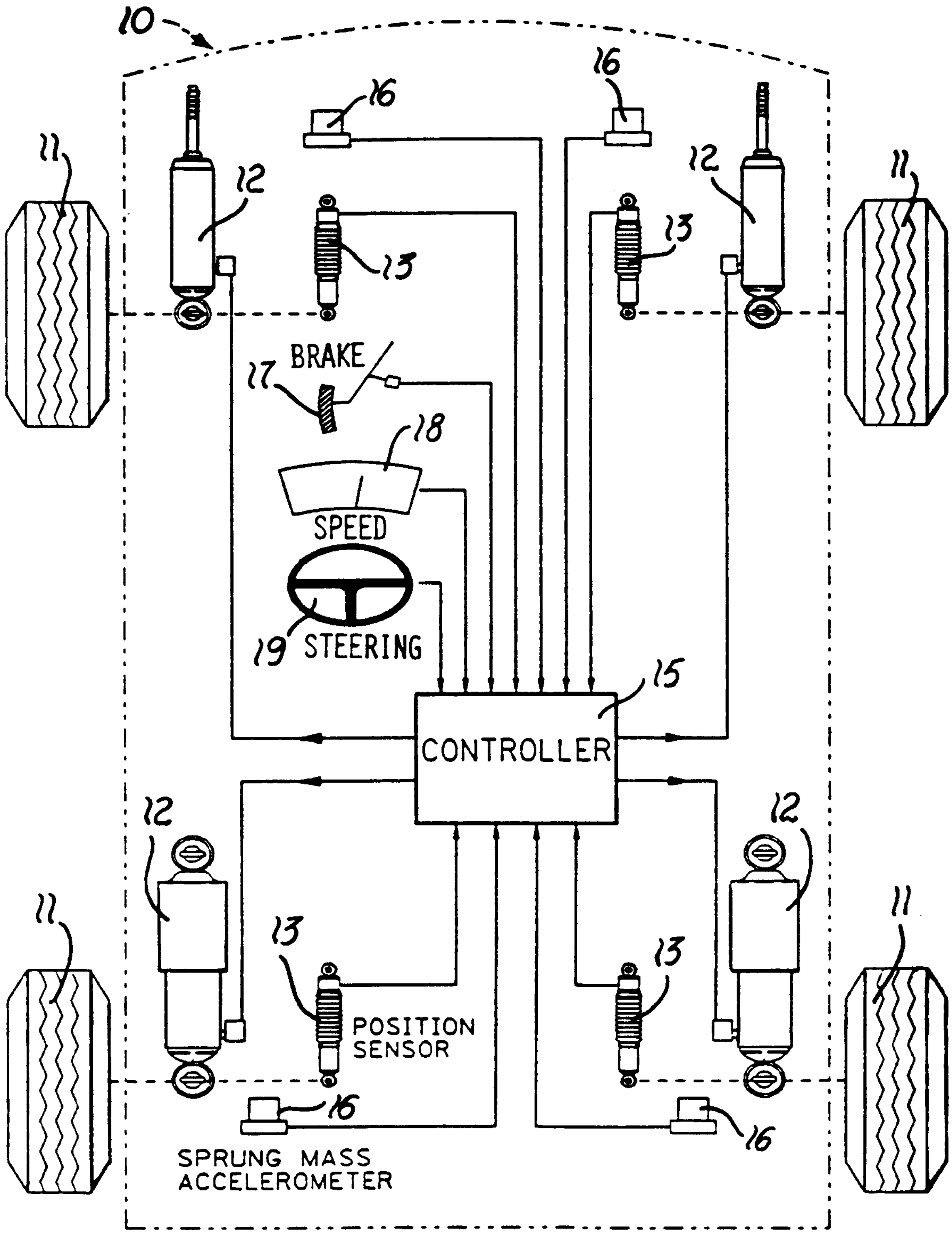
10
11
12
13
16
BRAKE
17
18
SPEED
STEERING
19
15
CONTROLLER
POSITION
SENSOR
SPRUNG MASS
ACCELEROMETER

FIG. 1

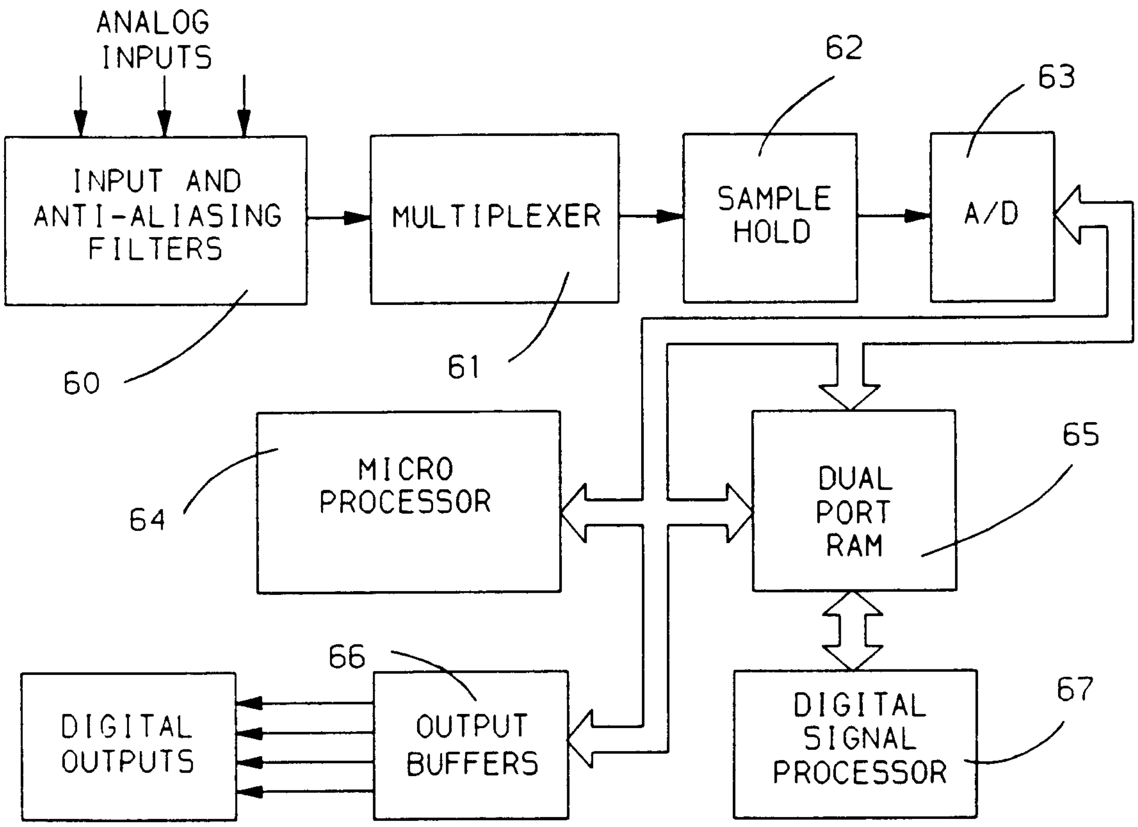
ANALOG
INPUTS
INPUT AND
ANTI-ALIASING
FILTERS
60
MULTIPLEXER
61
62
SAMPLE
HOLD
63
A/D
MICRO
PROCESSOR
64
DUAL
PORT
RAM
65
66
DIGITAL
OUTPUTS
OUTPUT
BUFFERS
DIGITAL
SIGNAL
PROCESSOR
67

FIG.2

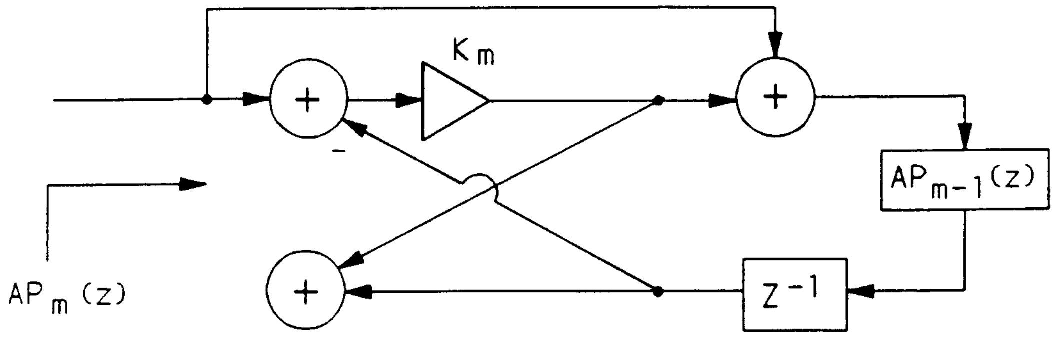


FIG.3A

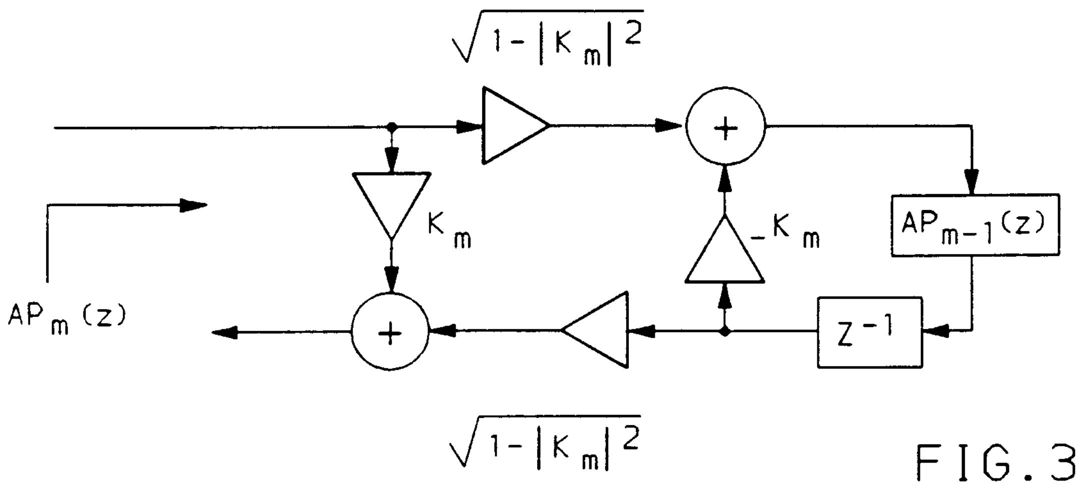


FIG.3B

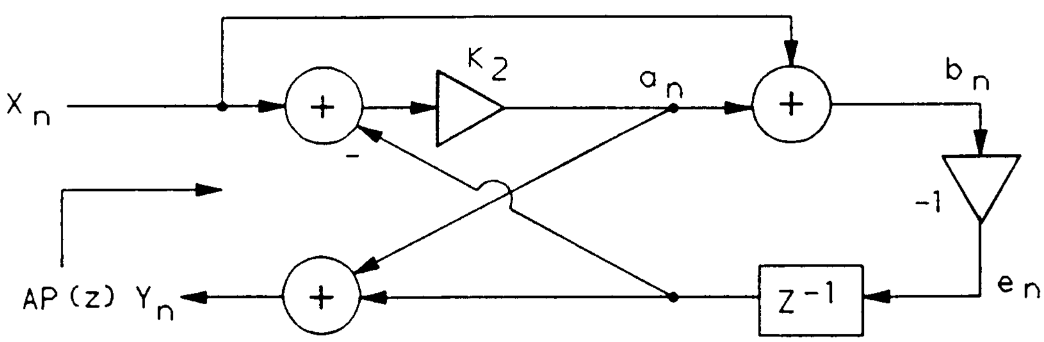


FIG.3C

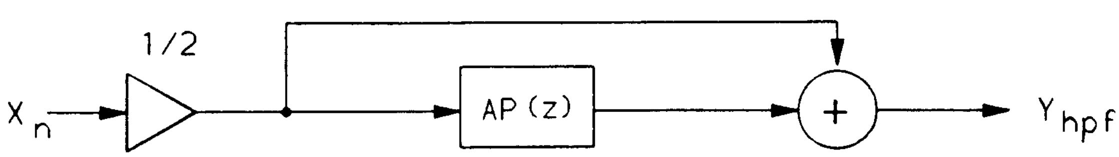


FIG.3D

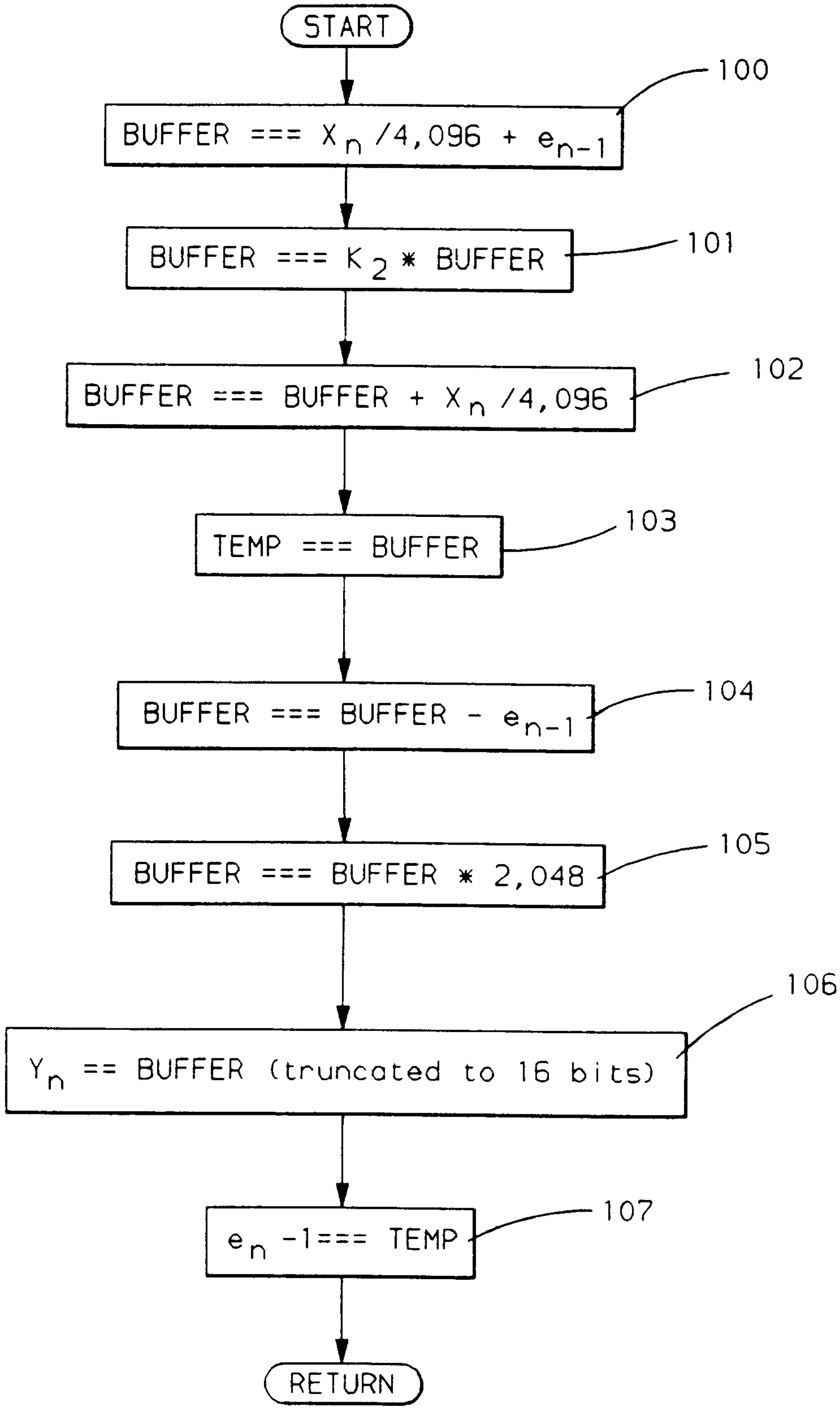
START
BUFFER === $X_n$ /4,096 + $e_{n-1}$
100
BUFFER === $K_2$ ∗ BUFFER
101
BUFFER === BUFFER + $X_n$ /4,096
102
TEMP === BUFFER
103
BUFFER === BUFFER - $e_{n-1}$
104
BUFFER === BUFFER ∗ 2,048
105
$Y_n$ == BUFFER (truncated to 16 bits)
106
$e_n$ -1=== TEMP
107
RETURN

FIG.4